# EUROPEAN PATENT APPLICATION

(11) **EP 2 687 717 A2**
(43) Date of publication of application: **22.01.2014**
(21) Application number: 12188145.2
(22) Date of filing: 11.10.2012
(51) Int. Cl.: F03B 17/06

(54) **Floating water power station**

(30) Priority: 17.07.2012 PL 40001412
(71) Applicant: Jeute, Piotr, 02-928 Warszawa (PL)
(72) Inventor: Jeute, Piotr, 02-928 Warszawa (PL)
(74) Representative: Pawlowski, Adam

(57) **Abstract**

A floating power station, comprising coaxial rolls (110, 120) with blades (140) positioned at their circumference, the rolls being configured to be partially submerged in water such that the flow of water incoming to the submerged portion of the rolls (110, 120) causes rotation of the rolls along the common horizontal axis of rotation (130), to which an electric power generator (150) is connected. The rolls (110, 120) have a total design displacement, for submersion from 10% to 40% of the volume of the rolls (110, 120), equal to the total weight of the power station, wherein the electric power generator (150) is connected with the axis of rotation (130) via a multiplying gear and the center of gravity of the power generator (150) is below the axis of rotation (130), to which a tow bar (115) is connected which is terminated by a handle (116) for affixing anchoring lines or chains (102).

## Description

The present invention relates to a floating water power station, in particular to a flow-through power station intended for installation in narrow and shallow water beds.

A water power station is used to transform the kinetic energy of flowing water into mechanical energy. Typical water power stations utilize the potential energy of water dammed above the power station, therefore they have to be installed in specific natural environments or use of artificial dams. Flow-through power stations utilize the kinetic energy of flowing water, therefore they can be installed in river courses or at the sea without the need for artificial damming, and therefore they do not interfere to a large extent with the nature. However, the known constructions of flow-through power stations are useful mainly at large river beds or at the sea.

There are known flow-through water power stations comprising two rolls, between which a belt is installed, the belt having blades which are propelled by the flow of water. Power stations of this type are known for example from US patents no. US 825,841 or US 787,562. Such power stations have relatively large dimensions and are designed to be installed in long, wide and deep water beds.

There are also known flow-through water power stations comprising rolls with blades, which are rotated by water flow. For example, a US patent no. US 3,973,864 presents a water power station comprising a pair of coaxial rolls with blades driven by water flow and a power generator connected to the axis of the rolls. The power station has a relatively large size and is designed to be installed on piles driven to the bottom of the water bed.

It would be advantageous to provide a floating water power station having a relatively small size and a construction providing high efficiency and reliability of operation, which could be easily mounted and demounted even at narrow, shallow and twisted water beds, such as natural water streams, with a minimum interference with nature and minimum hazards to the water fauna.

The object of the invention is a floating power station, comprising coaxial rolls with blades positioned at their circumference, the rolls being configured to be partially submerged in water such that the flow of water incoming to the submerged portion of the rolls causes rotation of the rolls along the common horizontal axis of rotation, to which an electric power generator is connected, wherein the rolls have a total design displacement, for submersion from 10% to 40% of the volume of the rolls, equal to the total weight of the power station, wherein the electric power generator is connected with the axis of rotation via a multiplying gear and the center of gravity of the power generator is below the axis of rotation, to which a tow bar is connected which is terminated by a handle for affixing anchoring lines or chains.

Preferably, the rolls comprise a left part and a right part, wherein the distribution of the blades of one of the parts is angularly shifted with respect to the distribution of the blades of the second part by an angle equal to half of the angular distance between the blades of the second part, and the blades of one part have a shape which directs incoming water towards the other part.

Preferably, the rolls comprise segments having a shape of a section of a cylinder, comprising a supporting frame configured to be mounted on the axis of rotation and a pontoon mounted thereon and having a shape of a section of a toroid with at least one blade mounted on its external surface.

Preferably, the pontoon is made of polyethylene.

Preferably, the blades have a shape of an asymmetric arched fin, the crown of which is shifter with respect to the center of the perimeter of the roll.

Preferably, the angle of attack of the blade with respect to the incoming water varies along the width of the blade from 20 to 75 degrees.

Preferably, the left part is movable along the axis of rotation with respect to the right part of the particular roll.

Preferably, the power station further comprises a back tow bar directed oppositely to the front tow bar.

The object of the invention is also an arrangement of floating water power stations wherein the front tow bars of the successive stations are connected to the back tow bars of the preceding stations.

The object of the invention is shown by means of an exemplary embodiment on a drawing, in which:
Fig. 1 shows schematically the embodiment of the invention in a top view,
Fig. 2 shows the embodiment of the invention in a slanted view,
Fig. 3 shows the embodiment of the invention in a top view,
Fig. 4 shows the embodiment of the invention in a front view,
Fig. 5 shows the embodiment of the invention in a side view,
Fig. 6 shows a segment of the roll in a front view,
Fig. 7 shows a segment of the roll in a side view,
Fig. 8 shows a segment of the roll in a top view,
Fig. 9 shows a segment of the roll in a slanted view.

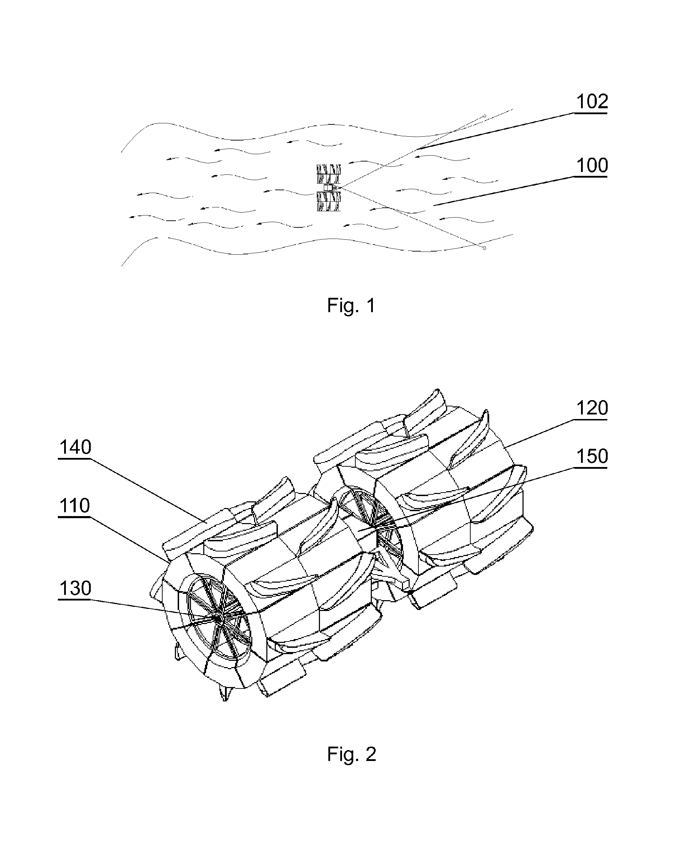

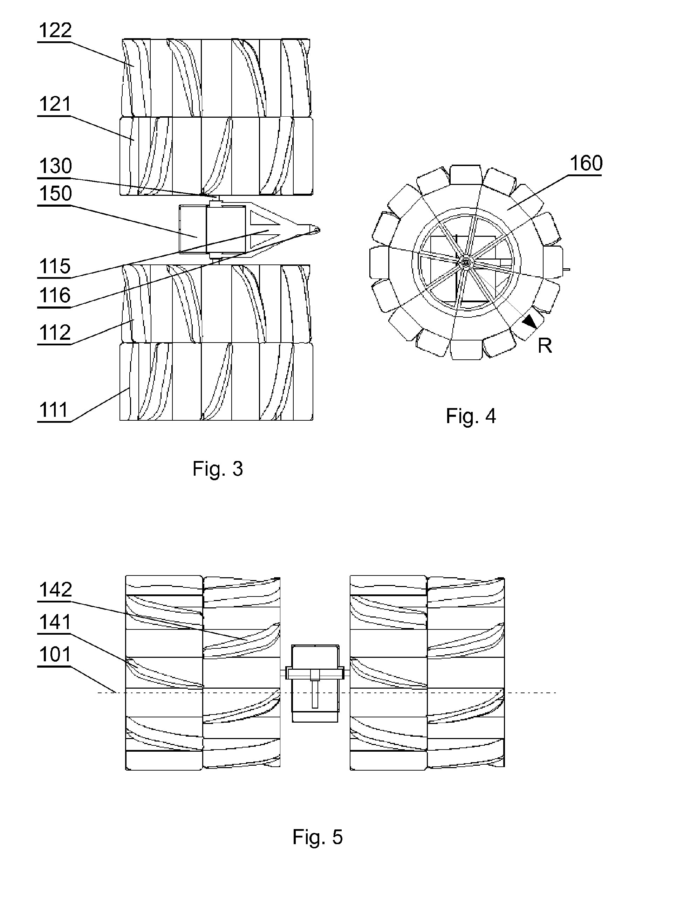

The embodiment of the invention, as shown in Figs. 1-5, is a floating water power station that can be installed in a bed of even small, narrow and twisted water flows 100, such as narrow rivers or streams, and anchored to the bottom or to the side by means of lines or chains 102. The power station comprises coaxial rolls 110, 120 with blades 140, having a horizontal axis of rotation 130. The rolls 110, 120 are configured to be partially submerged in water, such that the flow of water incoming towards the blades of the submerged part of the rolls 110, 120 causes rotation of the rolls around their axis of rotation 130. The rolls 110, 120 have a total design displacement, for submersion equal to 10%-40% of the volume of the rolls, preferably 25%, equal to the total weight of the power station. The design displacement is understood as the sum of the own mass of the rolls and their deadweight capacity equal to the maximum allowed submersion of the water station. Therefore, only 10% to 40% of the volume of the driving rolls 110, 120 is submerged below the water level 101, and their axis of rotation 130 is located above the water.

The axis of rotation 130 of the working rolls 111, 112 is coupled with an electricity generator 150, which converts the mechanical energy of rotating rolls 111, 112 to electric energy, which can be stored in a battery on the water station or transmitted to a bank of a river, for example by means of a separate cable or by one of the holding lines or chains 102.

To allow the power station to freely flow on the water surface, the working rolls should have a positive displacement, i.e. they should be made of a material lighter than water or comprise air chambers to increase the displacement of the power station.

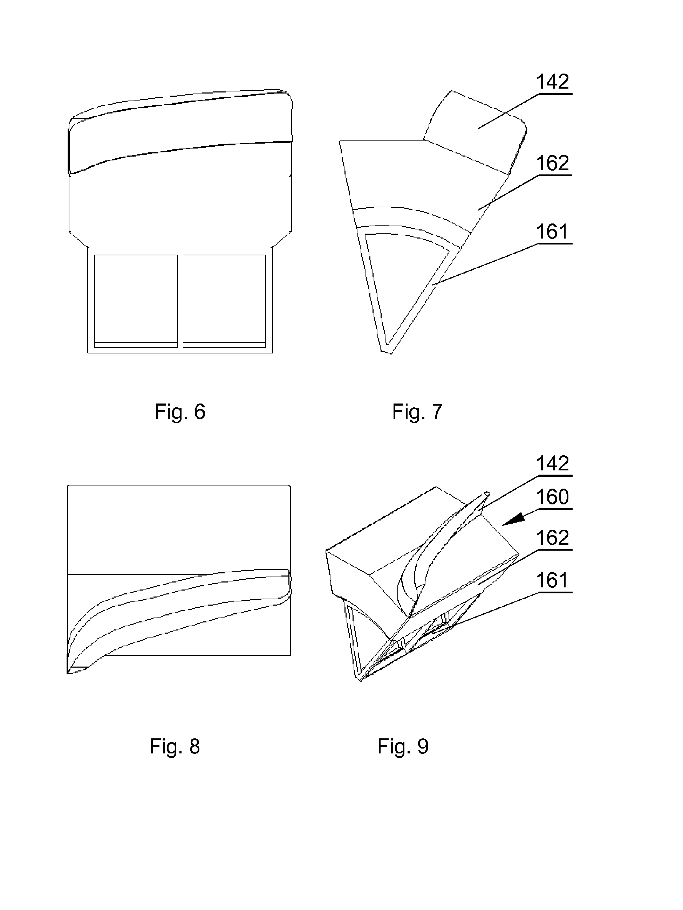

In the presented embodiment, each roll 110, 120 has two parts: left 111, 121 and right 112, 122. Each of the parts comprises segments 160, as shown in details in Figs. 6-9.

A single roll segment 160 has a support frame 161 configured to be mounted on the axis of rotation 130 of the roll and a pontoon 162 mounted on the frame and comprising at least one blade 140. The pontoon 162 can be made of polyethylene, partly foamed or empty inside. The embodiment shown in Figs. 6-9 relates to a segment of the right part 111, 121 of the roll with a right blade 142, wherein the terms "left", "right" are related to the side on which one part of the roll is mounted with respect to the other part, looking from the side of the tow bar 115. A single segment 160 has a shape of a section of a cylinder, and the pontoons 162 have a shape of a section of a toroid and together they form a toroidal pontoon. The blades 141, 142 are shaped and positioned such that the blades 141 of the left part 111, 121 of the cylinder direct the oncoming water towards the right part 112, 122 of the roll and the blades 142 of the right part 112, 122 of the roll direct the oncoming water towards the left part 111, 121 of the roll. The blades of one part are distributed radially in half way between the blades of the other part, i.e. the radial positioning of the blades of one part of the wall is shifted by an angle equal to the half of the angular distance between the blades of the second part of the roll. The shape of the blades should minimize the hydrodynamic resistance while exiting water. Water which flows from one blade is directed to another blade, to which it passes part of its energy and then flows further, thereby not causing swelling. The presented embodiment, due to the shape of the blades which causes acceleration of the stream of water on each of the blades, allows to more effectively (than in the case of straight blades) use the energy of free floating and wide stream of water, which is not limited by a weir and which is not directed to working wheels.

The blades 141, 142 preferably have the shape of an asymmetric arched fin, having a crown shifted with respect to the center of the perimeter of the cylinder. The angle of attack with respect to the flowing water changes along the width of the blade from an acute angle to almost a right angle, for example from 20 to 75 degrees, wherein the highest bend is present in the initial half of the width of the blade, preferably at 25-35% from the edge of attack.

Preferably, the blades are concave, i.e. their edge which is furthest from the surface of the cylinder and forms the section of the surface of the cylinder surrounding the whole construction at the largest diameter thereof, is bent towards the incoming water and obstructs its flow below the blade and facilitates the desired directing of water from one blade to another blade. Moreover, by bending the edge the blades are strengthener and widened, such as the whole double cylinder, while launching into water or while taking out of water could be pulled by the tow bar over the ground.

At the axis of rotation 130 of the rolls 110, 120 there is mounted, via bearings, a housing 151 of a generator 150 with a multiplying gear and the fastening of the first tow bar 115. The generator 151 itself is mounted below the axis of rotation 130. By positioning a relatively heavy generator 151 low below the shaft 130, it forms a ballast directed downwards and positioned fully below the axis of rotation 130, thereby enabling affixing of the anchor line 102 with respect to the housing of the gear via the tow bar 115 at the height of the bearings, in the axis of the shaft, i.e. exactly in the center of resistance of the whole construction, but considerably higher than its center of gravity. Thereby, the weight of the generator 151 together with the multiplying gear and housing resists the torque on the multiplying gear and forms a balancing reaction arm. The tow bar 115 is therefore mounted at the right angle to the reaction arm formed by the generator 150 mounted below the axis 130. This allows to simplify the construction and reduce its manufacturing costs, while increasing its efficiency. The arm of the tow bar 115 has a length, measured from the axis of rotation 130 to the handle 116, which is larger than the radius R of the working rolls 110, 120 and is terminated by the handle 116 for affixing lines or chains 112 for anchoring the power station to the banks of the water channel.

By fixing the generator 150 together with the multiplying gear below the axis 113 and at the right angle to the anchoring arm 115, its weight functions as a reaction arm which effectively compensates the resistance of transmission of torque of the axis 113 to the generator 150 without additional fixing constructions. The whole construction may be freely subject to possible movements or changes on the water surface, which is particularly important for turbulent mountain rivers. An additional advantage of positioning the generator as an reactor arm in between the two working rolls is the relatively easy mounting thereof and servicing accessibility to the generator and the multiplying gear, as compared to a floating roll with a generator.

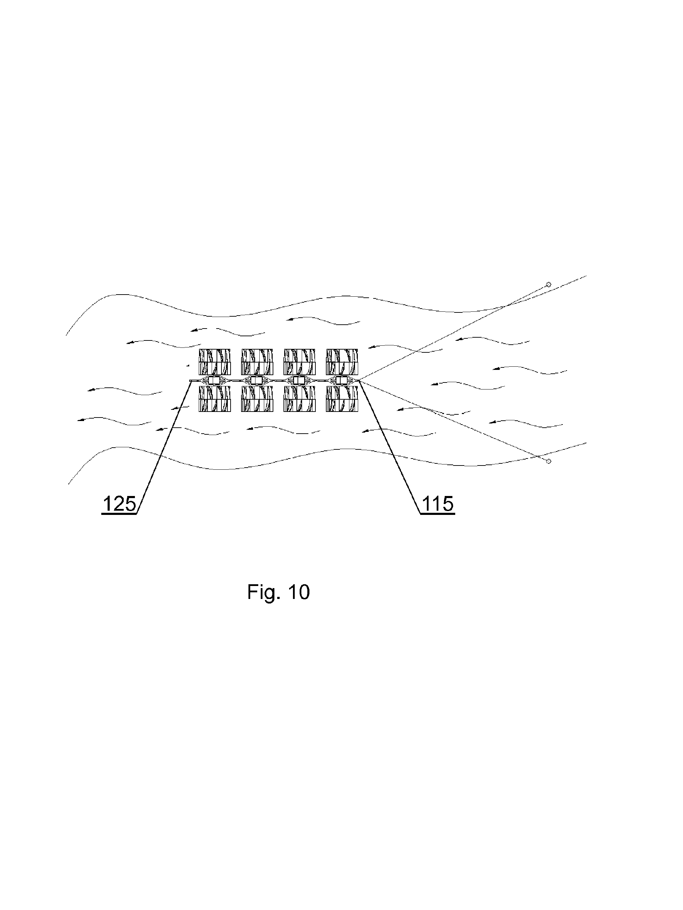

Moreover, the power station may comprise a back tow bar 125, directed oppositely to the front tow bar 115, configured to be connected, directly or via a line or chain, to the front tow bar 115 of another power station of the same type as shown in Fig. 10. Therefore, the power stations may be connected in series and form a construction which freely flows on water and the shape of which adapts optimally to the flow of water.

## Claims

1. A floating power station, comprising:
- coaxial rolls (110, 120) with blades (140) positioned at their circumference, the rolls being configured to be partially submerged in water such that the flow of water incoming to the submerged portion of the rolls (110, 120) causes rotation of the rolls along the common horizontal axis of rotation (130), to which an electric power generator (150) is connected,
**characterized in that**
- the rolls (110, 120) have a total design displacement, for submersion from 10% to 40% of the volume of the rolls (110, 120), equal to the total weight of the power station,
- wherein the electric power generator (150) is connected with the axis of rotation (130) via a multiplying gear and the center of gravity of the power generator (150) is below the axis of rotation (130), to which a tow bar (115) is connected which is terminated by a handle (116) for affixing anchoring lines or chains (102).

2. The floating water power station according to claim 1, **characterized in that** the rolls (110, 120) comprise a left part (111, 121) and a right part (121, 122), wherein the distribution of the blades (141) of one (111, 112) of the parts is angularly shifted with respect to the distribution of the blades (142) of the second part (121, 122) by an angle equal to half of the angular distance between the blades (142) of the second part, and the blades (141) of one part (111, 112) have a shape which directs incoming water towards the other part (121, 122).

3. The floating power station according to claim 1, **characterized in that** the rolls (110, 120) comprise segments (160) having a shape of a section of a cylinder, comprising a supporting frame (161) configured to be mounted on the axis of rotation (130) and a pontoon (162) mounted thereon and having a shape of a section of a toroid with at least one blade (140) mounted on its external surface.

4. The floating water power station according to claim 3, **characterized in that** the pontoon (162) is made of polyethylene.

5. The floating water power station according to claim 1, **characterized in that** the blades (140) have a shape of an asymmetric arched fin, the crown of which is shifter with respect to the center of the perimeter of the roll (110, 120).

6. The floating water power station according to claim 5, **characterized in that** the angle of attack of the blade with respect to the incoming water varies along the width of the blade from 20 to 75 degrees.

7. The floating water power station according to claim 1, **characterized in that** the left part (111, 121) is movable along the axis of rotation (130) with respect to the right part (112, 122) of the particular roll (110, 120).

8. The floating water power station according to claim 1, **characterized in that** it further comprises a back tow bar (125) directed oppositely to the front tow bar (115).

9. An arrangement of floating water power stations according to claim 8, **characterized in that** the front tow bars (115) of the successive stations are connected to the back tow bars (125) of the preceding stations.
